# EUROPEAN PATENT APPLICATION

(11) **EP 4 528 230 A1**
(43) Date of publication of application: **26.03.2025**
(21) Application number: 23306551.5
(22) Date of filing: 19.09.2023
(51) Int. Cl.: G01D 5/353

(54) **REPEATERED DAS WITH SELECTIVE FILTERS**

(71) Applicant: Alcatel Submarine Networks, 91620 Nozay (FR)
(72) Inventor: TOLSTIK, Nikolai, 7071 Trondheim (NO); RONNEKLEIV, Erlend, 7052 Trondheim (NO); BRENNE, Jan Kristoffer, 7048 Trondheim (NO); SORGARD, Trygve, 7075 Tiller (NO); KLIMENTOV, Dmitry, 7224 Melhus (NO)
(74) Representative: Loyer & Abello

(57) **Abstract**

A distributed fiber-optic sensing system transmits probe pulses and load light into a sequence of connected optical fiber segments. An optical receiver receives light from the probe pulses that has been backscattered in respective sensing fibers of the fiber segments and returned to the receiver over Rx fibers. Near the end of the sequence, an optical filtering circuit is connected to receive some of the load light output by the next-to-last optical fiber segment and to receive some of the light backscattered in the sensing fiber of the last optical fiber segment and to output at least some of the received load light and backscattered light into the Rx optical fiber respective to the sensing fiber of the last optical fiber segment. The optical filtering circuit is configured to output light with a lower ratio of powers than the light that is received by the optical filtering circuit, the ratio being the time-averaged optical power in a spectrum of the optical probe pulses over the time-averaged optical power in a spectrum of the load light.

## Description

### Technical Field

The disclosure relates to methods and apparatus for distributed acoustic sensing (DAS) in fiber-optic cables and related sensing techniques.

### Art Background

Distributed acoustic sensing (DAS) is a useful technique for measuring strain fluctuations at acoustic frequencies in fiber optic cables. Through the phenomenon of Rayleigh backscattering (RBS), optical fibers within the fiber optic cable can serve as the sensing elements. In operation, a laser pulse is launched into the cable, and backscattered light is collected from the cable and processed optoelectronically to provide the strain measurements.

There are several kinds of DAS systems. In coherent Rayleigh optical time domain reflectometry (COTDR), for example, probe pulses of coherent laser light are launched into an optical fiber. RBS within the fiber causes the fiber to act as a distributed interferometer, causing the intensity of backscattered light returning from any particular section of the fiber to vary as strain fluctuations change the optical path length of that fiber section. Monitoring the intensity of the backscattered light over the course of many successive pulses can provide dynamic information about the strain profile in the fiber.

Other DAS systems perform phase-sensitive coherent optical time-domain reflectometry (φ-OTDR). In φ-OTDR, the probe pulses have relatively long coherence length, generally longer than the pulse length. This makes it possible to detect changes in the phase of a backscattering center in the fiber when it is perturbed by an acoustic wave. The resulting measurements can offer greater sensitivity and resolution than measurements made with standard OTDR techniques.

An extension of the techniques of φ-OTDR was proposed in Ole Henrik Waagaard et al., "Real-time low noise distributed acoustic sensing in 171 km low loss fiber," OSA Continuum 4, 688-701 (2021), the entirety of which is hereby incorporated herein by reference. As described there, coherent detection is combined with linear frequency modulated (LFM) optical pulses of much greater duration than those used with φ-OTDR. The possibility of extending the sensor range using such a technique was reported.

However, the interrogation range of currently available DAS technology is still limited by transmission losses in the optical fiber, and by the limited ability to compensate such losses with the optical power budget of the DAS interrogator. Although remotely pumped optical amplifiers may be included in the fiber-optic cable, they can at best extend the interrogation length to a few hundreds of kilometers in typical instances.

These limitations are especially severe for traditional repeatered telecommunication fiber links. The sampling frequency of the OTDR system is limited by the round-trip time-of-flight of the interrogation pulses. Because these links are generally very long, the sampling frequency is relatively low, resulting in degraded system performance. Moreover, the repeater nodes in these links typically use a High Loss Loopback (HLLB) fiber path for monitoring. The HLLB fiber path has high optical loss that, in some cases, may be prohibitive for distributed sensing.

There is, accordingly, a need for further advances in the field of DAS, and in related field, that can extend the interrogation range in long, repeatered systems, among others, and that can provide quantitative information about conditions at precise cable locations.

### Summary of the Invention

A typical repeatered optical fiber cable has multiple fiber spans that are connected end-to-end by repeater units. Typically, each fiber span has at least two unidirectional fibers for signal propagation in opposite directions. Herein, the end of the cable where a DAS interrogator instrument is located is the reference end. Relative to the reference end, the cable has a pair of fibers for light propagating in opposite directions. One fiber is referred to here as the "outbound" fiber or the "transmit (Tx)" fiber, and the other fiber is referred to as the "return" fiber or the "receive (Rx)" fiber.

It should be understood in this regard that a long cable may be interrogated from both ends. In such a case, there may be separate Tx/Rx fiber pairs terminated at each end of the cable, with light propagating from the respective end on the respective Tx fiber, and propagating toward the respective end on the respective Rx fiber. In such an arrangement, the interrogators at a given one of the two ends may advantageously interrogate the part of the cable that is closest to that given end.

At each repeater unit, the entering and exiting outbound fibers are end-connected by an optical amplifier, and the entering and exiting return fibers are likewise end-connected by an optical amplifier. By way of example, but without limitation, a typical amplifier for this purpose is an erbium-doped fiber amplifier (EDFA).

In DAS operation, probe pulses, also referred to here as "interrogation pulses", are launched from the sensor location into the outbound fiber, and they propagate toward an end node of the fiber-optic cable. As the pulses propagate in the fiber, some of the pulse energy is backscattered. The main backscatter mechanism is typically RBS, although in particular applications, other scatter or reflection mechanisms may be important and are not excluded from the scope of this disclosure.

The backscattered light of significance for the DAS measurements may be generated by the probe pulses within the outbound fibers as the pulses propagate down the outbound fiber path. Alternatively, a portion of the outbound-propagating light may be diverted into dedicated sensor fibers, where the backscattered light of significance for the DAS measurements is generated. In either case, the backscattered light is coupled into the return fibers and returned to the sensor location by propagation on the return fiber path.

The amplifiers at the repeater nodes on the outbound and return fiber paths are needed to maintain a sufficient signal level. Preferably, the gain of an amplifier should match the loss of the previous span, so as to maintain the same signal level output from all Tx amplifiers, and similarly to maintain the same signal level output from all Rx amplifiers. Thus, the probe signals and the return signals (i.e., the backscattered light) each pass through a series of cascaded optical amplifiers.

The amplifiers on the outbound fiber path can potentially distort the probe pulses in undesirable ways. This is a problem for fiber amplifiers such as EDFAs, in particular. The amplifier may be in an unsaturated condition when a probe pulse first enters the amplifier fiber, but the amplifier may become progressively more saturated as the pulse propagates through the amplifier fiber. As a consequence, the pulse could experience time-varying gain in the amplifier, causing spikes and other distortions in the pulse waveform. One solution for mitigating this problem is to add a load signal, spectrally separated from the probe pulses, to maintain the amplifier in a saturated state.

In some configurations there may lack a separation between two probe pulses, so that the amplifier is already partly saturated when the second of the two pulses arrives. In such cases a change in wavelength between the pulses may still lead to a change in the level of saturation (or in the gain-medium inversion) between the two pulses, with associated time variation and undesired spikes and ripple in the pulse amplitude as the saturation settles to its new level. In that case as well, the problem may possibly be mitigated by adding a load signal that is spectrally separated from the probe pulses.

In order to minimize the interrogation noise, the signal response backscattered from the sensor fiber must be kept sufficiently high. This usually implies that the pulses launched into the sensor fiber should be kept as high as possible, without introducing nonlinear degradation of the signal due to stimulated Brillouin or Kerr nonlinearities. The efficiency and robustness of the gain stabilization by use of load signals may improve with increasing load power levels.

However, any increase in the total signal power being amplified in the amplifiers on the outbound fiber path will increase the demand for pump power. For reasons of cost, among others, it is desirable to limit the pump power. Accordingly, there is a need to balance the need for high load power to stabilize the amplifier gain, against the cost of pump power. Our experience is that effective Load stabilization of the Tx amplifier gain is possible when the total average load power in the Tx cable is similar to or somewhat below (exemplarily one half of) the peak interrogation signal power.

Nonlinear optical phenomena such as stimulated Brillouin scattering (SBS) and Kerr nonlinearities may degrade the probe pulses at high optical power. This places a further limit on the total optical power in the outbound fiber path.

The optical field of the return signal that returns to the DAS interrogator on the Rx line is a convolution of the field of the interrogator pulses and the Rayleigh scattering response from the sensor fiber. Briefly, the Rayleigh scattering response can be modelled as a distributed random white noise response versus delay, multiplied with an exponential decay with delay caused by fiber loss.

DAS measurements, particularly phase-sensitive DAS measurements, may be degraded by phase and intensity noise in the return signal, which lead to demodulated phase errors. Amplified spontaneous emission (ASE) contributes phase and amplitude noise that accumulates over the amplifier chain in the return fiber path.

Another mechanism that generates phase noise is self-phase modulation (SPM) of the phase of a DAS signal due to fluctuations in the intensity of the DAS signal itself. As is typical of nonlinear optical phenomena, SPM grows rapidly in severity as the strength of the affected signal increases. Intensity fluctuations introduced through Rayleigh scattering are a significant source of SPM on the return path.

Still another mechanism that generates phase noise is cross-phase modulation (XPM) of the phase of the DAS signals, due to intensity fluctuations in the load signals. Load signals in the Tx line should therefore preferably have either a minimum of intensity noise or very broad bandwidths relative to the bandwidth of the DAS signals. Very broad optical bandwidths would minimize the load intensity noise within the DAS signal bandwidth, which could otherwise contribute to degradation of the DAS signals through XPM. If the broadband load approach is used, a bandwidth greater than 100 GHz may be desirable, which could be achieved by, e.g., bandpass filtering an optical white-light source such as an ASE source. With the more narrowband load approach, some minimum load bandwidth, preferably greater than 200 MHz, might still be needed to suppress stimulated Brillouin scattering. This can be achieved without introducing intensity noise by modulating a narrowband source signal with a phase modulator.

Although suitable load light for the Tx fiber can be generated without intensity noise, a signal that is Rayleigh scattered will always have intensity noise with a bandwidth corresponding to its optical bandwidth. Therefore, large bandwidths, e.g., bandwidths greater than 100 GHz, are desirable for load signals that will experience Rayleigh scattering from a sensor fiber before serving as the desired load signal in the Rx fiber. A load signal on the return path can help to mitigate signal degradation due to degradation of the ASE-to-signal ratio and due to nonlinear phenomena by, among other things, stabilizing the gain of the Rx amplifiers.

Thus, adding a load signal can be beneficial both on the outbound fiber path and on the return fiber path. However, the factors that determine an optimal ratio of load power to DAS power, i.e., to power in the frequency band of the probe pulses, are not the same for the outbound fiber path as they are for the return fiber path.

We have found that system performance can be improved by adding a component to the optical propagation path in the fiber-optic cable that allows the load-to-DAS power ratio in the outbound fiber path to differ from the load-to-DAS power ratio in the return fiber path. We refer to such a component as a DAS/Load selective attenuator. In particular, our studies have predicted that in the systems we considered, performance is better when the load-to-DAS power ratio is greater on the return path than it is on the outbound path.

Accordingly, the present disclosure relates to a distributed fiber-optic sensing system comprising a sequence of connected optical fiber segments including a next-to-last optical fiber segment and a last optical fiber segment. The system also includes an optical transmitter to transmit load light and optical probe pulses to the sequence, an optical receiver to receive light from the sequence, and an optical filtering circuit.

Each one of the optical fiber segments includes a sensing fiber. Each sensing fiber is optically connected to couple light backscattered therein into a respective Rx optical fiber connected to return signals through the sequence to the optical receiver.

The optical filtering circuit is connected to receive some of the load light output by the next-to-last optical fiber segment and to receive some of the light backscattered in the sensing fiber of the last optical fiber segment, and it is connected to output at least some of the received load light and backscattered light into the Rx optical fiber respective to the sensing fiber of the last optical fiber segment.

The optical filtering circuit is configured to output light with a lower ratio of powers than the light that is received by the optical filtering circuit, the ratio being the time-averaged optical power in a spectrum of the optical probe pulses over the time-averaged optical power in a spectrum of the load light.

In embodiments, the optical filtering circuit is configured to reduce the ratio of powers by at least 3 dB.

In embodiments, the optical transmitter and the one or more load sources are configured such that the transmitted optical probe pulses have higher peak amplitudes than the transmitted load light.

In embodiments, the optical filtering circuit comprises a wavelength-selective attenuator configured to attenuate optical probe signals more than it attenuates light from the optical load sources.

In embodiments, the optical filtering circuit is configured to selectively divert the load light onto a bypass path, to input, to an optical preamplifier, light that has been diverted onto the bypass path, and to input, to the optical preamplifier, light from the optical probe pulses that has been backscattered by the sensing fiber of the last one of the optical fiber segments. The bypass path may include an optical attenuator.

In embodiments, the optical filtering circuit is configured to direct a portion of outbound light from the next-to-last fiber segment onto a bypass path, and to provide light from the bypass path to an optical preamplifier as preamplifier input if the light is from the optical load sources, but not if it is optical probe light. In such embodiments, the optical filtering circuit is further configured to direct backscatter to the optical preamplifier as preamplifier input, where the backscatter that is meant is optical probe light that has been backscattered by the sensing fiber of the last one of the optical fiber segments. The bypass path may include an optical attenuator.

In embodiments, the optical filtering circuit comprises a first and a second optical path. The first optical path that comprises a first preamplifier and is specifically connected to receive load light from the optical load sources. The second optical path comprises a second preamplifier and is specifically connected to receive light from the optical probe pulses. At least one of the first and second optical paths further comprises an attenuator. The optical filtering circuit further comprises an element for outputting the load light from the first optical path and the light from the optical probe pulses from the second optical path into the Rx optical fiber respective to the sensing fiber of the last optical fiber segment.

In embodiments, the optical filtering circuit is configured to provide, in the respective Rx optical fibers, a total time-averaged load power in the range of about 3 dBm to about 20 dBm and a total time-averaged optical power of light from the probe pulses of 0 dBm or less.

In embodiments, the optical filtering circuit is configured to provide, in the respective Rx optical fibers, a total time-averaged load power that is greater than a total time-averaged optical power of light from the probe pulses.

In embodiments, the optical filtering circuit is configured to provide, in the respective Rx optical fibers, a total time-averaged load power that is at least 6 dB greater than a total time-averaged optical power of light from the probe pulses.

In embodiments, the optical filtering circuit is configured to reduce the ratio of powers such that time-averaged optical power in wavelength channels dedicated to probe pulses is reduced relative to time-averaged optical power in wavelength channels dedicated to the light from the optical load sources.

In embodiments, each of the optical fiber segments except for the last optical fiber segment includes a Tx optical fiber for outbound signal transmission from the optical transmitter and further includes an Rx optical fiber, the Tx optical fibers are end-connected by first optical amplifiers, the Rx optical fibers are end-connected by second optical amplifiers, and the sensing fiber of each of the optical fiber segments is a respective Tx optical fiber. In alternative embodiments, the sensing fiber of each of the optical fiber segments is a respective additional fiber, i.e., a fiber that is neither a Tx fiber nor an Rx fiber. In more specific embodiments, the Tx and Rx optical fibers at the next-to-last one of the optical fiber segments are optically connected, with respect to both the light from the optical probe signals and the light from the optical load sources, by an optical path comprising a preamplifier and the wavelength-selective attenuator.

### Brief Description of the Drawings

FIG. 1 is a schematic drawing illustrating a distributed fiber-optic sensing system according to principles described here.
FIG. 2 is a schematic diagram illustrating a distributed fiber-optic sensing system, in a particular, but non-limiting, example.
FIG. 3 provides an example of a pulse train that could be used for measurement in, e.g., the distributed fiber-optic sensing system of FIG. 2. In FIG. 3, optical power is plotted as a function of time, for DAS pulses and load signals launched into the transmit (Tx) fiber of the sensing system during one interrogation period. The plot in FIG. 3 was calculated for a simulated amplifier design.
FIG. 4A is a spectrum of a pulse train and load signals, such as the pulse train and load signals of FIG. 3. The plot in FIG. 4A is an idealized version of a measured curve. FIG. 4A shows the time-averaged power spectrum at the input to the Tx fiber, as it might be measured by an optical spectrum analyzer.
FIG. 4B is an example spectrum of signals that could be input to the return ("receive" or Rx) fiber of a distributed fiber-optic sensing system in response to a pulse train and load signals, such as the pulse train and load signals of FIG. 4A being launched into the Tx fiber. The plot of FIG. 4B is an idealized version of a measured curve.
FIG. 5 is a graph of power versus time, over one interrogation period, for Rayleigh-reflected signals returning from a sensor fiber, in response to the launched signals of FIG. 4A. The plot of FIG. 5 shows the statistical expectation value of the power versus time, omitting random fluctuations.
FIGS. 6A, 6B, and 6C respectively illustrate possible alternative implementations of a DAS/Load Selective Attenuator according to principles described here.
FIGS. 7A, 7B, and 7C respectively illustrate alternative arrangements for the last node of a distributed fiber-optic sensing system, in which the backscattered DAS signal at the last node takes a different optical path from the load signals.
FIG. 8 is a graph of pulse power in milliwatts as a function of time in microseconds, showing one interrogation period of an example pulse train having overlapping interrogation pulses and a single constant load channel transmitted into a Tx fiber.

### Detailed Description

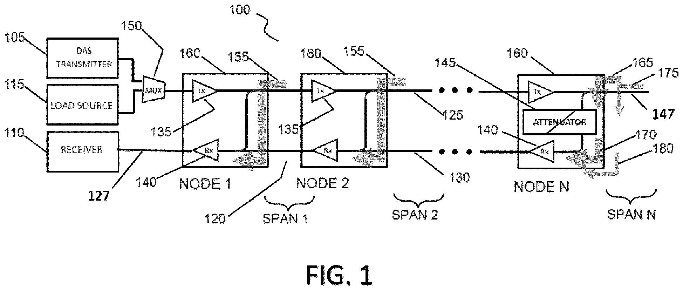

FIG. 1 is a schematic drawing illustrating a distributed fiber-optic sensing system **100,** in an example embodiment. As FIG. 1 is intended only as a pedagogical aid, some details of optical components and the like have been omitted to simplify the presentation for clarity purposes. System **100** includes an optical transmitter comprising a transmitter unit **105** for transmitting optical probe pulses, and one or more optical load sources **115.** System **100** further includes an optical receiver **110,** and a sequence of optical fiber segments **120,** which are respectively labeled in the figure as "span 1", "span 2", ..., "span N".

Each of the optical fiber segments includes an outbound optical fiber **125** and a return optical fiber **130,** except for a last segment, such as Span N of FIG. 1, which may lack a return optical fiber.

The outbound optical fibers are end-connected by first optical amplifiers **135,** which are labeled in the figure as transmit ("Tx") amplifiers. The return optical fibers are end-connected by second optical amplifiers **140,** which are labeled in the figure as receive ("Rx") amplifiers.

For example, the outbound fiber of Span 1 is connected by the Tx amplifier of Node 2 to the outbound fiber of Span 2, etc. Similarly, the return fiber of Span2 is connected to the return fiber of Span 1 by the Rx amplfier of Node 2, etc.

Each return optical fiber **130** is optically interconnected to a sensing fiber to receive light backscattered in the sensing fiber. In the example of FIG. 1, the sensing fibers are identical with the respective outbound fibers **125.** More specifically, the return fiber **127** from Node 1 to receiver **110** of FIG. 1 receives light backscattered from the outbound fiber of Span 1, the return fiber of Span 1 of FIG. 1 receives light backscattered from the outbound fiber of Span 2, etc.

In other embodiments, as will be explained below, the return optical fiber **130** of each fiber segment **120** may have a respective, dedicated sensing fiber to which it is optically interconnected so as to receive light backscattered therefrom.

At the end of a last one of the optical fiber segments **120,** for example the end of Span N-1 of FIG. 1, the outbound optical fiber from the preceding segment and the return optical fiber to the preceding segment are optically connected by an optical filtering circuit that is configured to reduce the time-averaged probe-to-load power ratio.

In other words, the optical filtering circuit is configured such that through amplification, attenuation, or a combination of both, there is a reduction in the time-averaged optical power of the light from the probe pulses, divided by the time-averaged optical power of the light from the load sources. Such a reduction may be caused, in part, by attenuation due to backscattering of the probe pulses in the sensing fiber.

In the example of FIG. 1, the time-averaged power ratio between light from the optical probe pulses and light from the optical load sources is altered, at least in part, by filter element **145** of Node N, which, as explained below, may be a DAS/Load Selective Attenuator. However, other elements may also contribute to the conditioning of the power ratio, including, in embodiments, Tx amplifier **235** and Rx amplifier **240** of Node N. For example, a suitable filter included in the Tx amplifier and/or the Rx amplifier, may contribute to the conditioning of the power ratio. Accordingly, there may be embodiments in which the optical filtering circuit is constituted by all of the circuit elements from the input to the Tx amplifier of, e.g., Node N, to the output of the Rx amplifier of, e.g., Node N.

In the example of FIG. 1, the optical connection between the outbound and return fibers of Span N-1, i.e., the span preceding Span N, may be effectuated by backscattered light from, e.g., a sensing fiber, that is passed through filter **145** before entering the return fiber. The sensing fiber shown in FIG. 1, for example, is Tx fiber **147** of Span N.

FIG. 1 also shows optical multiplexer **150,** which in various implementations may be used to combine the optical output from transmitter **105** and load source or sources **115** for launching onto the outbound branch of the system, which comprises outbound fibers **125** and Tx amplifiers **135.** As explained above, system **100** also has a return branch, comprising the return fibers **130** and the Rx amplifiers **140.**

In operation, some of the light transmitted on the outbound branch will be backscattered by Rayleigh backscattering or by any of various other mechanisms, as discussed below. The light backscattered in the sensing fiber of each fiber segment **120** is directed onto path **155,** from which the light is coupled into the corresponding return fiber **130.**

As represented in FIG. 1, each fiber segment or "span" **120** extends between nodes **160** which, may, e.g., be repeater units. Thus, as shown in the figure, Span 1 extends from Node 1 to Node 2, Span 2 extends from Node 2 to Node 3 (not shown explicitly in the figure), etc. Each node **160** includes a respective transmit amplifier **135** and a respective receive amplifier **140.** Each node **160** also includes a respective one of the paths **155** for coupling backscattered light onto the return branch.

The span following Node N is labeled in the figure as Span N. The probe light backscattered from the sensing fiber of node N follows a path **165** into optical filter **145.** The filtered backscattered probe light exiting optical filter **145** follows path **170** onto the return branch of the system.

As also shown in FIG. 1, the light from load source or sources **115** that has been backscattered from the sensing fiber of node N also follows a path into optical filter **145.** That is, the backscattered light due to the load sources is shown following path **175** into optical filter **145,** and it is shown following path **180** out of optical filter **145** and onto the return branch.

As will be understood from the discussion below, paths **175** and **180** are the main paths for light due to the load sources to enter the return branch, in the illustrated embodiment.

Although some backscattered light is coupled onto the return path at each node **160,** wavelength-selective elements (not shown in FIG. 1) at all but the last node block backscattered light at the load wavelengths from entering the return branch, in the illustrated embodiment.

In the illustrated embodiment, paths **165** and **175** are coincident, and paths **170** and **180** are likewise coincident. However, optical filter **145** is configured such that within the filter, the probe pulses are subjected to greater attenuation than the light from the optical load sources.

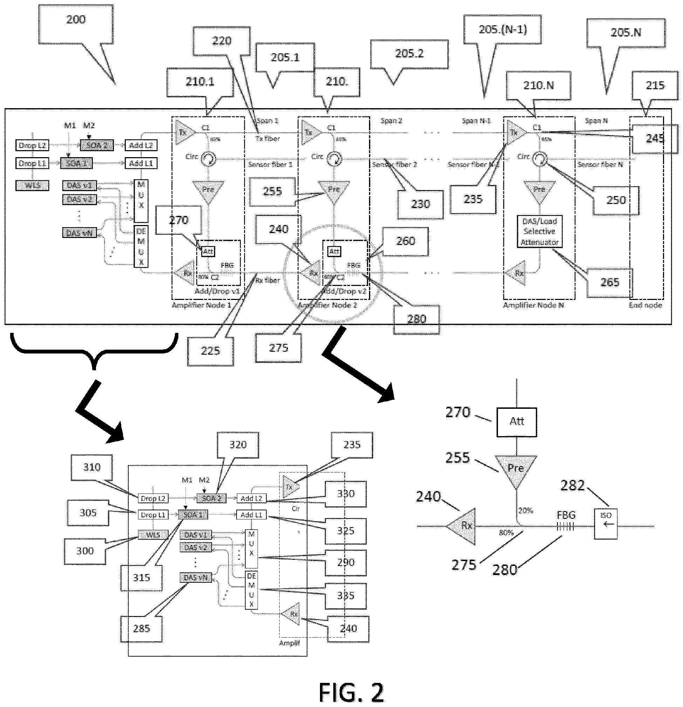

It should be understood that although paths **165** and **175** are coincident in the embodiment shown in FIG. 1 and FIG. 2, alternative arrangements are possible in which the backscattered probe signals and the load signals follow different paths while still being affected by an optical filtering circuit that changes their power ratio. Such arrangements also fall within scope of the present disclosure. Examples will be provided below.

It should be understood that although the Tx line in the embodiment shown in FIG. 1 does not extend further than Tx fiber **147,** and although Span N is shown without an Rx fiber, this is only a non-limiting example. For example, optical probe pulses may propagate on Tx fiber **147** to a further sequence of fiber segments, where they are again used for backscatter measurements as described above. In embodiments that use a set of different wavelength channels to probe respective fiber segments, the same set of wavelength channels may be reused for probing subsequent sequences of fiber segments. In embodiments, each of the respective ones of a plurality of sequences of fiber segments could be assigned a respective return line dedicated for returning backscattered probe light to the interrogator from its corresponding sequence of fiber segments.

It should also be understood that in some embodiments of the invention, one or more of the DAS wavelength channels could be used to interrogate the sensor fibers of more than one fiber span. In such a case, multiple loopback paths could be configured to direct the same wavelength channel to the Rx line. For example, each loopback path could be configured with a filter that passes the DAS channel wavelengths that are allocated to the corresponding sensor, but removes all other DAS channel wavelengths. The add coupler in such a loopback path could be configured so that it does not remove or reflect any wavelengths entering from the Rx line. The sampling period would then have to be extended so that the interrogator corresponding to a given wavelength channel will have enough time to receive the complete responses from all sensor fibers allocated to that wavelength channel without overlap. The return delay from the interrogator to the individual sensor fibers should preferably be configured to avoid such overlap by, e.g., consecutively connecting the sensor fibers interrogated by the same wavelength channel.

The most common mechanism for generation of backscattered light that is useful in this regard is Rayleigh backscattering (RBS). However, depending on the particular application, other backscatter mechanisms may also be significant. For example, point reflectors such as fiber Bragg gratings (FBGs) or broadband reflectors may be included in the scattering fiber, or other techniques to enhance the fiber back scattering. The principles described here may also be applicable to pulsed or intensity-modulated interrogation using Raman distributed temperature sensing (DTS), which is based on Raman backscattering, and to distributed Brillouin sensing, which is based on Brillouin backscattering.

Aside from DAS, the principles described here may also be applicable to pulsed OTDRs, pulsed interferometer interrogation, and pulsed interrogation of FBGs or FBG-based interferometers, among other techniques. In particular, it should be understood that our techniques may be applied for sensing backscatter from discrete reflective or backscattering elements, as well as for sensing distributed backscatter. Accordingly, the particular examples provided here should not be understood as limiting the scope of the present disclosure to DAS systems or to systems based on distributed backscatter of optical signals.

FIG. 2 is a block diagram illustrating a distributed fiber-optic sensing system **200,** in an example embodiment. FIG. 2 illustrates a more specific embodiment than FIG. 1. In FIG. 2, a sequence of fiber spans **205.1-205.N** are respectively labeled as Span 1, Span 2, ..., Span N. The fiber spans are connected end-to-end by respective nodes **210.1-210.N,** which are labeled in the figure as Amplifier Node 1, ..., Amplifier Node N. Span 1 begins at node **210.1,** and Span N ends at node **215,** which is labeled in the figure as End Node.

Each of the fiber spans **205.1-205.(N-1)** includes a Tx fiber **220,** an Rx fiber **225,** and a sensor fiber **230.** Fiber span **205.N** includes a sensor fiber **230,** but in the illustrated embodiment, it omits Tx and Rx fibers. The sensor fibers are labeled in the figure as Sensor Fiber 1, Sensor Fiber 2, ..., Sensor Fiber N. In the embodiment of FIG. 2, the sensor fibers are the source of the backscatter signals that are returned for measurement.

Each of nodes **210.1-210.N** includes a Tx amplifier **235** for amplifying signals on Tx fiber **220,** and an Rx amplifier **240** for amplifying signals on Rx fiber **225.**

Each of nodes **210.1-210.N** includes an optical loopback path between Tx fiber **220** and Rx fiber **225.** Component elements of the loopback path shown in the diagram include, for each of nodes **210.1-210.(N-1),** coupler **245** (C1), circulator **250,** preamplifier **255,** and add/drop module **260.** The loopback path in Node **210.N** includes the coupler, circulator, and preamplifier, but it omits the add/drop module. Instead, the loopback path of Node **210.N** includes DAS/Load Selective Attenuator **265.** The circulator **250** could be replaced by a standard coupler, at the expense of typically 6 dB extra insertion loss.

The embodiment of FIG. 2 is configured for wavelength-division multiplexing (WDM) of the probe pulses. This makes it possible to individually address each sensor fiber according to the wavelength or, equivalently, the optical frequency *ν*, assigned to the corresponding node. It should be understood that the principles described here are applicable to a broad range of fiber-optic sensing systems that include, but are not limited to, WDM systems. Accordingly, the example of FIG. 2 is meant to be illustrative only, and not as limiting.

The add/drop module **260** in each of nodes **210.1-210.(N-1)** is part of the WDM functionality. An add/drop module suitable in the present context can be implemented in several ways. For example, a thin-film filter (TFF) could be used in place of the fiber Bragg grating (FBG) used in the example of FIG. 2. Accordingly, the implementation shown in FIG. 2 should be understood only as a non-limiting example.

Turning to the figure, it will be seen that add/drop module **260** includes an attenuator **270,** a coupler **275,** and a fiber Bragg grating (FBG) **280.** An optical isolator **282** is advantageously included on the Rx fiber, upstream of FBG **280.** Very briefly, the practical effect of FBG **280** is to reflect signals with wavelengths that lie within its design bandwidth, and to transmit signals in other wavelength channels. Accordingly, all signals that enter the FBG on the return fiber from higher-numbered nodes will be transmitted, except for signals within the design bandwidth.

Signals outside the design bandwidth that are launched onto the return fiber in the upstream direction by coupler **275** will be transmitted and ultimately lost. (By the "upstream" direction is meant the counterpropagating direction toward the output of the previous Rx amplifier.)

However, signals within the design bandwidth that are launched onto the return fiber in the upstream direction will be reflected by the FBG and will continue propagating on the return fiber in the return direction, i.e., the co-propagating direction.

The add/drop module **260** and other components of the loopback path will be discussed in further detail below.

Each of N DAS interrogators **285** generates a sequence of probe pulses at a respective optical frequency ν1, ν2, ..., vN. The pulse sequences are combined by the optical multiplexer MUX **290** to provide a frequency-multiplexed pulse train. The pulses in each frequency channel are repeated with a sampling period which, for the illustrated embodiment, needs to be larger than the optical two-way delay of the longest sensor fiber in the system.

Two load channels are generated by passing light from a white-light source (WLS) **300** through two filters **305** (Drop L1) and **310** (Drop L2) that extract respective first and a second load-frequency bands to the inputs of two semiconductor optical amplifiers **315** (SOA1) and **320** (SOA2), which are modulated by drive currents M1 and M2, respectively. Drive currents M1 and M2 modulate the gains of the SOAs, resulting in modulation of the power of respective load signals L1 and L2. Respective add filters **325** (Add L1) and **330** (Add L2) combine the load signals L1 and L2 with the DAS interrogation pulses output from multiplexer **290.** The resulting signal is fed to the Tx amplifier **235** in Node 1. In operation, the return signal output from the Rx amplifier **240** in Node 1 is passed to demultiplexer **335,** which distributes the N channel frequencies to their respective DAS interrogators for demodulation.

Node **210.N** (Node N), as noted, differs from the other nodes by not having any Rx signal input, and by having a DAS/Load Selective Attenuator **265** in place of an add/drop module. Attenuator **265** allows for the attenuation applied to the DAS to differ from the attenuation applied to the load channels.

In example embodiments, the DAS/Load Selective Attenuator **265** passes all DAS and load channels from Sensor Fiber N to the Rx chain. In alternative embodiments, attenuator **265** may be configured to pass only DAS channel vN together with the load channels to Rx chain, or to pass only certain of the DAS channels with the load channels to the Rx chain.

In the example embodiment of FIG. 2, each coupler **245** (C1) has a coupling ratio of 85:15. The 15 % output from C1 in each of Nodes **210.1** to **210.(N-1)** is passed to the corresponding Tx fiber; that is, the 15% output from Node 1 is passed to the Tx fiber of Span 1, etc. The 85 % output from C1 in each of Nodes **210.1** to **210.(N-1)** is passed via the corresponding circulator **250** to the corresponding sensor fiber **230.** The 85:15 splitting ratio allows power launched into the Tx fiber to be lower than that launched into the sensor fiber. This is beneficial for suppressing accumulation of nonlinearities in the multiplicity of cascaded Tx fibers. Meanwhile, the backscattered signals from the sensor fibers can still be kept relatively strong, to ensure a high signal-to-ASE ratio at the outputs of the preamplifiers **255.**

In each node, the backscattered signals from the sensor fiber are passed via the circulator to the preamplifier. The dominant mechanism of backscattering from the fiber will typically be Rayleigh scattering. For some applications, however, other scattering mechanisms may dominate, such as UV-enhanced scattering or other distributed scattering, frequency-shifted scattering such as Brillouin or Raman scattering, reflection from discrete narrowband reflectors such as FBGs, or reflection from discrete broadband reflectors, which could be induced, e.g., by high-energy laser pulses in the infrared that are projected into the fiber.

In each of nodes **210.1** to **210.(N-1),** the output from the preamplifier is passed to the corresponding add/drop filter module **260.**

In each of nodes **210.*n*,** *n*=1*,* ..., N-1, the add/drop filter module is configured to couple the preamplifier output in DAS channel *n* to the Rx amplifier input, while excluding all other preamplifier output from the Rx amplifier input.

The add/drop filter module is further configured to pass, to the Rx amplifier input, the light in all higher-numbered DAS frequency channels that is incident on the add/drop filter module from upstream on the Rx fiber. That is, for *n* = 1, 2, ..., N-1, the add/drop filter module of Node n is configured to pass frequency channels *ν*_{*n*+1}, ..., *ν*_{N} to the Rx amplifier input, where *νₙ* is the frequency channel assigned to Node *n, n* = 1, 2, ..., N.

The add/drop filter module is further configured to pass load frequencies entering from upstream on the Rx fiber to the Rx amplifier input.

At each of nodes **210.1** to **210.(N-1),** the add/drop filter module will drop light in the home frequency channel, i.e., light in channel *νₙ* for Node *n,* if the light enters the add/drop filter module from the Rx fiber. By contrast, the add/drop filter module will pass light in the home channel to the Rx amplifier input if the light enters the add/drop filter module from preamplifier **255.** Light entering the add/drop filter module from the preamplifier will be dropped if it is in a load channel or in any of the higher-numbered DAS channels. Thus, light from Sensor Fiber *n* in its home frequency channel ν*ₙ* will be added to the Rx path, whereas light in the same frequency channel, but coming from the Rx fiber in span *n*, will be dropped.

In an example embodiment, each of the add/drop modules **260** achieve add/drop functionality using a strong fiber Bragg grating **280** in combination with a coupler **275** (C2) with an 80:20 coupling ratio. In addition, an optional attenuator **270** may be included to tune the level of the signal that is added to the Rx line. Such an attenuator could be implemented, e.g., by adding a short piece of a high-loss fiber.

As noted above, grating **280** in Node *n* is designed to reflect channel *νₙ* and to transmit the remainder of the spectrum. The dropped signals will travel backward into the Rx fiber and will eventually be absorbed by the output port of the Rx amplifier in the next node.

The asymmetric coupling ratio of coupler **275** (C2) is beneficial because it reduces the transmission loss in the path between two subsequent Rx amplifiers, although this comes at the expense of a somewhat higher gain requirement for preamplifier **255.** Because this makes it possible to reduce the Rx amplifier output power below what would be needed with a symmetric 50:50 coupler, it can help to reduce the nonlinear distortion in the Rx fiber.

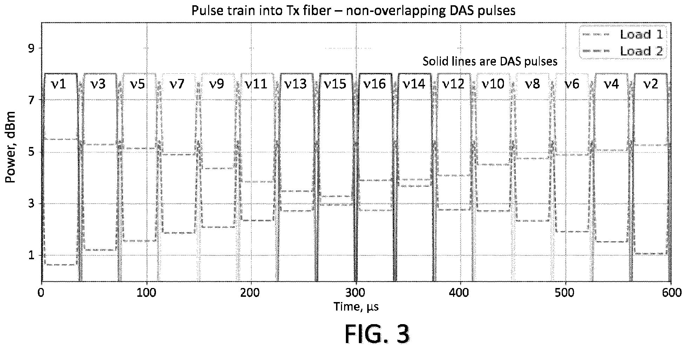

FIG. 3 is a plot of optical power versus time, for DAS pulses and load signals launched into the Tx fiber during one interrogation period. The plot in FIG. 3 was calculated for a simulated amplifier design. FIG. 3 is an example of a pulse train that could be used, e.g., in the measurement system of FIG. 2. A total of sixteen wavelength channels for DAS pulses are represented in FIG. 3. On the horizontal axis, the unit of time is one microsecond. On the vertical scale, the measure of optical power is dBm. The DAS pulses are labeled according to the center frequencies of their respective wavelength channels, i.e., with the labels *ν*₁, *ν*₂, ..., *ν*₁₆. The respective load signals are labeled as Load 1 and Load 2. The pulse train of FIG. 3 is repeated with a sampling period that should be longer than the optical two-way delay of the longest sensor fiber in the system.

In the example of FIG. 3, the load channels are modulated, as the figure shows. The power launched on the Tx line in each load channel is time-dependent, and it is at all times comparable to or lower than the peak power of the DAS pulses.

In the example of FIG. 3, the DAS pulses are separated and apodised so that they do not overlap in time. This is desirable because it reduces the possibility of four-wave mixing (FWM) between overlapping channels in the outbound (Tx) transmission spans. FWM is undesirable because it can generate new frequencies that could interfere with the DAS channel frequencies and could seed secondary nonlinear interactions that could accumulate over multiple transmission spans.

As seen in FIG. 3, the duration of each interrogation pulse may be on the order of several tens of microseconds. A long duration of the interrogation pulses is generally desirable to allow for transmission of as much energy as possible per pulse without being limited by Kerr nonlinearities or amplifier output power limitations. In general, the optical signal-to-noise ratio improves with increasing pulse energy, provided that nonlinear degradation is avoided. In order to achieve a high spatial resolution in the DAS measurement despite the long pulse duration, chirped interrogation pulses may be used in combination with chirp compression at the receiver, as taught in the prior art. The chirp bandwidth could typically be in the range from 10 to 200 MHz, for example 80 MHz. The spatial resolution of the DAS measurements will be proportional to the inverse of this bandwidth. As known in the prior art, chirp compression typically involves detecting the complex optical field received at the instrument with a coherent receiver and converting it to a complex digital signal with analog-to-digital converters. This complex digital signal is convolved with a matched filter impulse response h*(-t), which is essentially a time-inverted complex conjugate of the complex modulation h(t) applied to the transmitted interrogation pulse. A digital processor may, for instance, be configured to use the well-known "overlap-save" FFT-based convolution algorithm to perform the matched-filter digital signal processing.

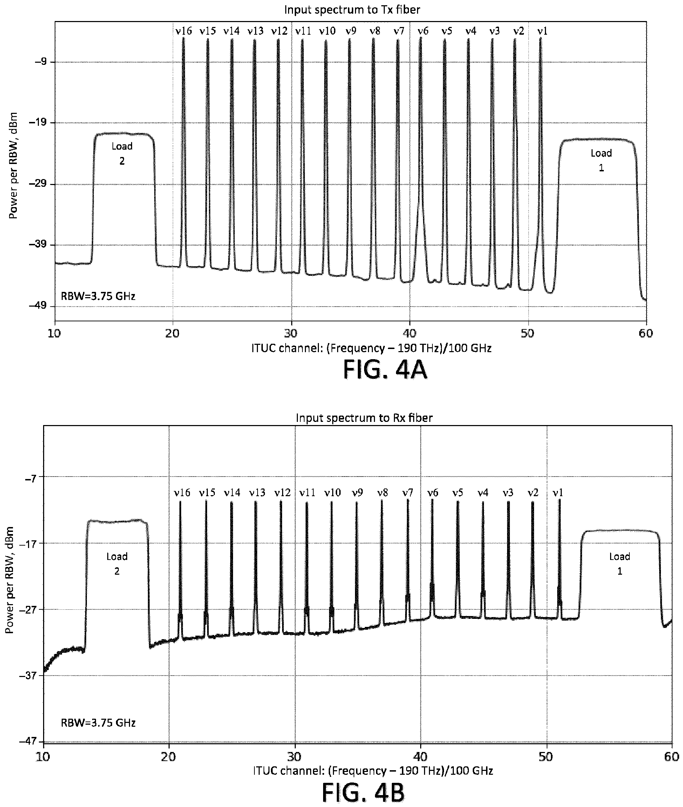

FIG. 4A shows a spectrum of a pulse train such as the pulse train of FIG. 3. The plot in FIG. 4A is an idealized version of a measured curve. FIG. 4A shows the time-averaged power spectrum at the input to the Tx fiber, as it might be measured by an optical spectrum analyzer (OSA) with RBW = 3.75 GHz. The optical frequency axis shows the ITUC channel number, which is the offset from 190 THz in units of 100 GHz. The DAS channels, which are ordered from *ν*₁ to ν₁₆, are centered close to every second ITUC channel from ITUC51 to ITUC21. The DAS channel bandwidth is around 80 MHz, which is much smaller than the RBW of the optical spectrum analyzer. Consequently, the peak power of each DAS channel seen in the spectral plot represents the total time-averaged power in that channel.

With further reference to FIG. 4A, Load channels 1 and 2 are centered at opposite sides of the DAS channel spectrum at ITUC 55.5 and 14, with respective bandwidths of 400 GHz and 500 GHz. Since the load bandwidths are 107-133 times the RBW, the load power per RBW measured by the OSA is about 20.2 and 21.2 dB lower than the total time-averaged power of the respective load channels.

Because the DAS pulses are non-overlapping and apodised, there will be "empty" time periods of reduced, or even of absent, signal level in the DAS channels that are input to the first Tx amplifier which, as noted, is typically an EDFA. A purpose of the load signals is to fill the empty periods with optical power, in order to suppress intensity ripples at the EDFA output at the start of the following pulse. Another purpose of the load signal is to stabilize the saturation of the amplifier, and thus to stabilize the frequency-dependent gain, as a function of time. In one approach, this is done by varying the two individual load powers as a function of time. In general, the loads should be adjusted such that the gain of both the probe signal and the gain of each load signal compensates for loss in the corresponding transmission span at all times of the signal sequence. The compensation may be, e.g., for loss in the previous transmission span or loss in the following transmission span, or it may be an average of those two losses. In this way, the shape of all signals can be preserved through the sequence of repeaters and transmission spans.

The example embodiment described here uses the signals Load 1 and Load 2, which are two broadband load signals centered at appropriately chosen frequencies, as discussed below. The DAS and load channels are modulated independently as functions of time, but with equal repetition periods.

It will be understood from the above discussion that the spectral distribution of the optical signal changes with time. As a consequence, the population inversion distribution along the first EDFA as well as subsequent EDFAs may also change with time, resulting in a time-dependent EDFA gain spectrum. This is disadvantageous because it is not in general possible to spectrally flatten a time-dependent EDFA spectrum with a gain-flattening filter (GFF). As the light passes through an increasing number of amplifiers in a repeatered line, the temporal and spectral distortions will cumulatively deteriorate the DAS signal sequence, thus degrading the interrogation process.

However, we found that by maintaining an average (integral) population inversion along the active fiber that is constant over time, it is possible to stabilize the frequency dependence of the EDFA gain. In the present example, this is achieved using the two load channels Load 1 and Load 2, with suitably chosen central frequencies. One load channel is preferably centered at the optical frequency corresponding to the maximum EDF gain within its optical bandwidth, and the other load channel is preferably centered at the optical frequency corresponding to the minimum EDF gain. By "EDF gain versus frequency" is meant the gain experienced by the respective frequencies during operation, during the pulse duration, when they pass through the EDF. In other words, the load center wavelengths should be placed, respectively, at the wavelengths of maximum and minimum GFF loss.

Numerical simulation shows that by modulating both the sum and the ratio of the two load channels as the power of the various DAS signal channels is changing, it is possible to tune the average (integral) population inversion along the EDFA active fiber, and consequently its gain spectrum, to hold constant over time. Residual frequency dependence of the stabilized gain can be removed with a GFF. This provides a way to mitigate the intensity ripples that would otherwise be induced by on-transitions and off-transitions of the DAS channels.

It is advantageous for reasons of economy and system reliability to limit the amount of optical power that has to be output from the amplifiers in the Tx chain. However, each Tx amplifier needs to produce enough DAS pulse energy so that there is sufficient power in the backscatter signal that reaches the preamplifier from the far end of each sensor fiber. That is, if the input to the preamplifier is too low, the signal-to-ASE ratio at the output of the preamplifier may also be too low, resulting in unacceptable noise in the instrument receivers. On the other hand, the maximum DAS pulse energy that can be launched is limited to the stimulated SBS threshold, which is in the order of 2 mJ.

In practice, the signal-to-ASE requirement for the particular application will generally determine the DAS pulse power that needs to be output from the Tx amplifier. The load power will be determined in view of the desired DAS pulse power. To limit the power consumption, the load power should be kept close to a minimum. Our simulations indicate that combined load-signal powers averaged over time, that are 3 dB to 8 dB below the peak pulse power will generally be sufficient.

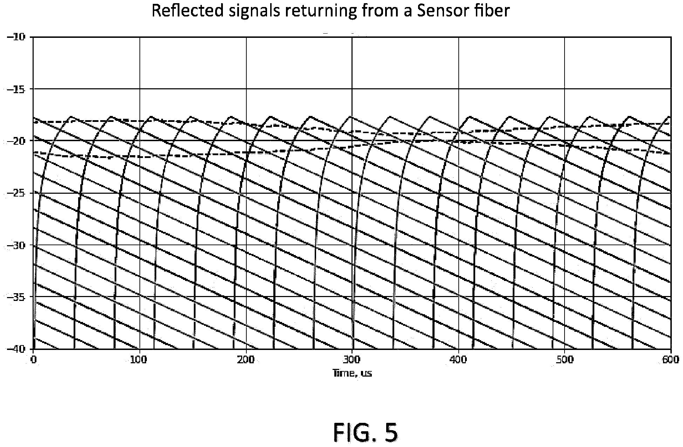

FIG. 5 is a graph of power versus time, over one interrogation period, for the Rayleigh-reflected signals returning from a sensor fiber, in response to the launched signals of FIG. 4A. The plot of FIG. 5 shows the statistical expectation value of the power versus time, omitting random fluctuations.

As the figure shows, when a returning pulse arrives to the circulator, the back-reflection of that channel first increases for the duration of the pulse, and then it decays with an exponential time constant of about 140 µs due to the fiber propagation loss. As the figure also shows, the modulated load channels are smoothed out by the same exponential response.

It is noteworthy that in practice, due to the random nature of the phase and magnitude of the Rayleigh scatterers, the actual signal powers shown in FIG. 5 will fluctuate with a standard deviation that is comparable to (typically about 50% of) the mean value, and with a bandwidth equal to the optical bandwidth of the signal in the channel. (If discrete reflectors are used, the phase delay of each reflector will still be random, and the reflected signal will have similar intensity fluctuations.)

To avoid unacceptable SPM-induced phase noise, the peak expectation value of each DAS channel should be limited in the Rx cable, preferably to less than about 0.3 mW at the Rx amplifier output. For a 60-km sensor fiber and a 600-ps sampling rate, this corresponds to a time average per DAS channel that is less than about -11 dBm, or less than about 0 dBm summed over all DAS channels.

Without a load signal, EDFAs in the Rx chain operating with output powers less than about 0 dBm will generally operate in an unsaturated regime where the gain has little dependence on the signal power. This is especially the case when the pump power is high, which is desirable in order to achieve a low noise figure. With a load signal of sufficient power, however, the EDFA output power could be sufficient for operation in the saturated regime. This could be preferable, because, among other reasons, saturated operation will tend to stabilize the power against deviations in amplifier gains or span losses from their nominal design values.

An alternative way to reach saturated operation on the Rx chain is to increase the gain and the output power from the amplifier. If this second approach is used, extra attenuation should be added between the amplifier and the Rx fiber to balance the gain against the span loss, and to maintain a low DAS power in the Rx fiber.

However, there are also other reasons why one may want to increase the load power in the Rx chain. If the span lengths do not match with the pulse repetition period, the DAS channels that are added to the Rx line in subsequent amplifier nodes N-1, N-2, and so on, will not be evenly distributed in time any more, and the total DAS power may end up fluctuating significantly with time within the sampling period. Such fluctuations may lead to an undesired time-dependence of the gain.

For example, a scenario is possible in which the responses from several sensor-fiber spans happen to be almost synchronized in the Rx line in some DAS channels, so that the peak powers in those DAS channels are overlapped in time. The peak in the combined power of those almost synchronized responses could further overlap in time with the minimum response from another DAS channel, i.e. with the response from the far end of the sensor fiber interrogated by the other DAS channel. As a result, the high combined power of the almost-synchronized peaks could saturate the Rx amplifiers below their nominal gain, suppressing the already weak power of the weaker channel. This could degrade the signal-to-ASE ratio for the weaker channel, possibly resulting in unacceptable noise in the sensor signals from the sensor fiber corresponding to the weaker channel.

The considerations discussed above suggest that increasing the time-averaged load-signal power relative to the time-averaged DAS-signal power in the Rx amplifiers could improve the signal-to-ASE ratio of the resulting measurements. To summarize:
(i) Limiting the load power in the Tx line is desirable for limiting the cost of high pump power.
(ii) Limiting the time-averaged combined power of return channels to less than or equal to about 0 dBm is helpful for limiting SPM-induced noise.
(iii) Operating the Rx amplifiers in the saturated regime is beneficial for stabilizing the propagating power in case of deviations or changes in gain or loss. In a partly saturated regime, which could be a preferred option, the gain decreases moderately with increasing input power.
(iv) The Rx amplifiers can be saturated without increasing the load power by increasing the gain and adding passive loss directly following each amplifier. If span lengths are unequal, however, there may be undesirable consequences that militate against this approach to achieving saturation.

For example, if the span lengths vary so that the round-trip delay in some spans does not match the sampling period, many channels may end up with their peak power more or less aligned in time, causing the combined saturating power from all channels to change substantially over the sampling period. By way of example, span lengths could vary by design, due to constraints on the placement of amplifier nodes on the seafloor during cable installation, or variations in span lengths could be introduced during cable repairs. Large variations in the combined signal power leads to changes in saturation, and thus in the gain.

A possible consequence of unequal span lengths when saturating the Rx amplifiers by increasing the gain and adding passive loss directly following each amplifier is that if a given channel reaches its power minimum at a time where the combined power is high, it will experience a saturated gain that does not compensate fully for the span losses, and thus the signal-to-ASE ratio of this channel may degrade below an acceptable level.
(v) Consequently, we believe that a better option for achieving saturated operation is to increase the load-to-DAS power ratio in the Rx line compared to the Tx line. For example, it could be desirable for the combined time-averaged load power in the Rx line to be on the order of 10 mW (i.e., 10 dBm), while the combined time-averaged DAS power is on the order of 1 mW (0 dBm), or less. Under those conditions, the amplifier saturation will be dominated by the load, and fluctuations in the combined DAS power will play a less important role. In the Tx line, the required time averaged combined load power may be from 0.5 to 1 times the time averaged combined power of the DAS channels, and higher load-to-DAS ratios are not desired due to cost considerations.

Accordingly, it may be beneficial for the optical filtering circuit to reduce the time-averaged probe-to-load power ratio by at least 3 dB. In embodiments, this could be achieved, e.g., with a DAS/Load Selective Attenuator that attenuates the time-averaged power in the optical probe signals more, by at least 3 dB, than the time-averaged power in light from the optical load sources.

It may likewise be beneficial for the optical filtering circuit to condition the power ratio such that in the return optical fibers, the total time-averaged load power is greater than the total time-averaged DAS power, exemplarily by at least 6 dB. Similarly, it may be beneficial for the optical filtering circuit to condition the power ratio such that the total time-averaged load power in the return optical fibers is in the range of about 3 dBm to about 20 dBm, and the total time-averaged DAS power in the return optical fibers is 0 dBm or less.

FIG. 4A, as noted above, shows an example of time averaged DAS and load power levels launched onto the Tx line. It could be advantageous for the corresponding DAS and load power levels that enter the Rx line to stand in a different ratio, with the load power levels relatively greater. Likewise, it could be advantageous to increase the load-to-DAS power ratio in the returning signals represented in FIG. 5.

The DAS/Load Selective Attenuator, as in attenuators 165 and 265 of FIGS. 1 and 2, allows for different attenuation factors to be applied, respectively, to the DAS channels and to the load channels. This provides one way, among others, to increase the load-to-DAS power ratio in the Rx line, relative to the power ratio launched into the Tx line.

A comparison of FIG. 4B to FIG. 4A is illustrative. FIG. 4A, as noted above, is a spectrum of signals launched into a Tx fiber. FIG. 4B is the corresponding spectrum of signals as input to an Rx fiber. The plot of FIG. 4B is an idealized version of a measured curve.

In FIG. 4A, the mean power of each DAS channel is about -5 dBm, and each load channel carries about 0.5 dBm. In FIG. 4B, it will be seen that the mean power of each DAS channel is -11 dBm, whereas the load channels carry about 7 dBm each. (The figure of 0.5 dBm for FIG. 4A and the figure of 7 dBm for FIG. 4B are obtained by applying a multiplication factor of about 21 dB, to convert power per RBW to total power.)

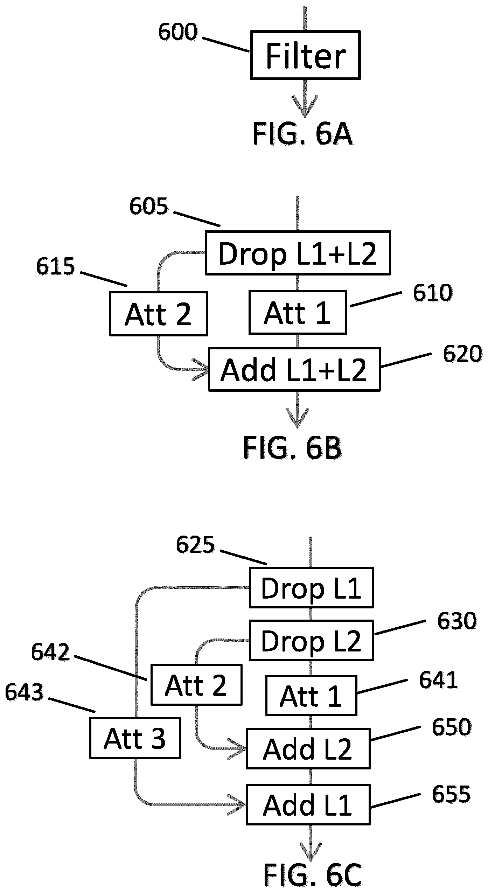

The DAS/Load Selective Attenuator, i.e., attenuators 165 and 265 of FIGS. 1 and 2, may be implemented in several different ways. By way of example, each of FIGS. 6A, 6B, and 6C illustrates a possible implementation of the DAS/Load Selective Attenuator. The implementation shown in FIG. 6A is a single-component filter device **600,** configured with a suitable wavelength dependence. Such a filter device may be based, for example, on a thin-film filter (TFF). Such a filter can also be configured to correct for deviations from gain flatness in the preamplifier. Such a configuration could possibly obviate the need for a separate gain-flattening filter (GFF) for the preamplifier.

The implementation shown in FIG. 6B comprises a drop filter **605,** which in the figure is labeled Drop L1+L2. Drop filter **605** separates Load 1 and Load 2 from the DAS channels. The implementation of FIG. 6B further comprises two separate attenuators **610** (labeled Att 1) and **615** (labeled Att 2). Attenuator **610** applies a certain level of attenuation to the DAS signals only, and Attenuator **615** applies a different level of attenuation to the Load signals only. The DAS signals and the Load signals are then recombined by add filter **620,** which is labeled Add L1+L2 in the figure.

The implementation shown in FIG. 6C comprises drop filters **625** and **630,** which are respectively labeled Drop L1 and Drop L2 in the figure. Drop L1 filter **625** diverts Load 1 into attenuator **643,** labeled Att 3 in the figure. Drop L2 filter **630** diverts Load 2 into attenuator **642,** labeled Att 2 in the figure.

The DAS signal is passed through filters **625** and **630** to attenuator **641,** labeled Att 1 in the figure. The respective attenuators impose an attenuation on the DAS channels that is different from the attenuation of the Load channels, and may also impose different attenuations on the respective Load channels.

The attenuated signals from attenuators **641** and **642** are recombined by add filter **650,** which is labeled Add L2 in the figure. The attenuated signal from attenuator **643** is recombined with the output of add filter **650** by add filter **655,** which is labeled Add L1 in the figure.

For the implementations of FIGS. 6B and 6C, the attenuators could be implemented by, e.g., splicing in short sections of high-loss optical fiber. With optimal tuning of the preamplifier gain, it could be possible to omit Att 2 and Att 3, i.e., to omit attenuator **615** from the FIG. 6B implementation, or to omit attenuators **642** and **643** from the FIG. 6C implementation. When employing the implementation of FIG. 6B or FIG. 6C, it could be beneficial to include an additional GFF with the preamplifier.

In the example embodiments illustrated in FIG. 2 and in FIGS. 6A-6C, the backscattered DAS signal from sensor fiber N and the load signal are jointly amplified in preamplifier **255** of Node N, and both pass through DAS/Load Selective Attenuator **265** before entering Rx amplifier **240** of Node N. However, there are alternative arrangements in which the Tx and Rx fibers can be optically connected, exemplarily at Node N, by an optical filtering circuit configured to attenuate optical probe signals more than it attenuates light from the optical load sources. Such alternative arrangements also lie within scope of the present disclosure.

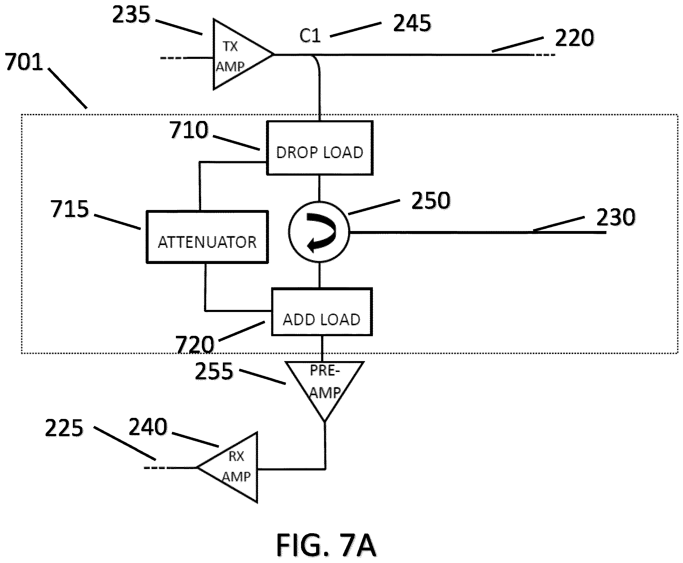

For example, FIGS. 7A-7C are examples of alternative arrangements for Node N, in which the backscattered DAS signal from sensor fiber N and the load signal take different paths.

Figure elements that are common to FIG. 2 and to FIGS. 7A-7C are called out by like reference numerals. In each of the implementations of FIGS. 7A-7C, wavelength-selective elements are preferably used to exclude load light that has been backscattered by the sensing fiber from returning to the interrogator via the return line.

Turning first to the embodiment of FIG. 7A, it will be seen that an optical filtering circuit **701** is connected between coupler **245** and preamplifier **255.** In the embodiment of FIG. 7A, the optical filtering circuit includes circulator **250** and sensor fiber **230,** which were discussed above with reference to FIG. 2. Within circuit **701,** drop filter **710** passes DAS signals to circulator **250,** while diverting load signals to attenuator **715.** Circulator **250** passes DAS signals backscattered from sensor fiber **230** to add filter **720,** where they are combined with the load signals from attenuator **715** and passed to preamplifier **255,** and from there to Rx amplifier **240** and Rx fiber **225.** Whereas the DAS signals are subjected to attenuation due to the backscattering process in sensor fiber **230,** the load signals are subjected to different attenuation in attenuator **715.**

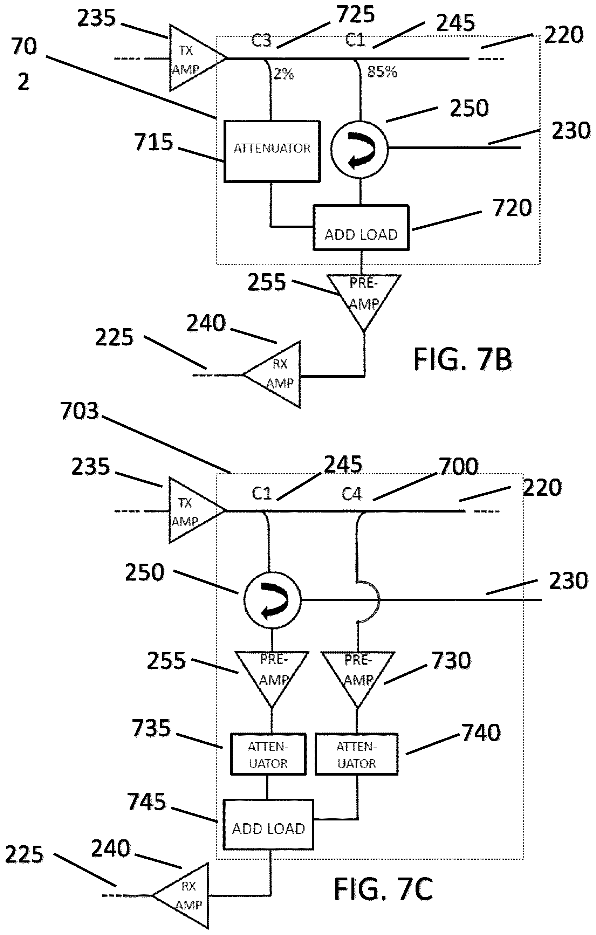

Turning next to the embodiment of FIG. 7B, it will be seen that there, optical filtering circuit **702** is connected between Tx amplifier **235** and preamplifier **255,** and that circuit **702** includes the C1 coupler **245,** circulator **250,** sensor fiber **230,** attenuator **715** as in FIG. 7A, and add filter **720** as in FIG. 7A. Circuit **702** includes an additional coupler **725,** labeled C3 in the figure. Coupler **725** diverts a portion of the light incident on it from Tx amplifier **235** into attenuator **715,** for example a 2% portion as indicated in the figure. Coupler **245** exemplarily diverts an 85% portion of the downstream light incident on it into circulator **250.** As in FIG. 7A, the DAS signals are subjected to attenuation due to the backscattering process in sensor fiber **230.** By contrast, the load signals that are diverted through attenuator **715** are combined with the backscattered DAS signals at add filter **720** and passed from there to preamplifier **255,** to Rx amplifier **240,** and to Rx fiber **225.** Light in the DAS channels that passes through attenuator **715** is blocked at add filter **720** and thus is not returned through the Rx line.

Turning next to the embodiment of FIG. 7C, it will be seen that there, optical filtering circuit **703** is connected between Tx amplifier **235** and Rx amplifier **240,** and that circuit **703** includes C 1 coupler **245,** circulator **250,** sensor fiber **230,** preamplifier **255,** and an additional preamplifier **730.** The output of preamplifier **255** passes through attenuator **735,** and the output of preamplifier **730** passes through attenuator **740.** In operation, backscattered light in the DAS channels is directed by circulator **250** through preamplifier **255** and through attenuator **735** to add filter **745.** Some of the light in the load channels that is backscattered by the terminal end of Tx fiber **220** is directed by C4 coupler **700** through preamplifier **730** and through attenuator **740** to add filter **745.** At add filter **745,** light in the DAS channels that is arriving from attenuator **735** is passed through to Rx amplifier **240** and from there to Rx line **225.** Also at add filter **745,** light in the load channels arriving from attenuator **740** is added to the signal being passed through to Rx amplifier **240** and Rx line **225.** All other light is blocked at add filter **745.**

It should be understood that the embodiments of FIGS. 7A-7C are examples intended solely for purposes of illustration, and are not exhaustive of the many alternative arrangements that fall within scope of the present disclosure.

In other approaches, for example, a load channel specifically dedicated for the Rx line could be selected from the Tx line at Node N, preamplified, and launched onto the Rx fiber. In such embodiments, separate load channels could be used for the Tx line and the Rx line, respectively. In such embodiments, it may be desirable to block the Tx load signal from entering the return fiber. This could be achieved by, e.g., using arrangements similar to FIG. 7A or FIG. 7B, where filters **720** and/or **710** are designed to let only the Rx load signal bypass the circulator **250** to enter preamplifier **255.** With that arrangement, a filter that blocks the Rx load signal could be added to the path going from coupler **245** via scattering from the sensor fiber to the return fiber **225.**

One advantage of a loading scheme where the Rx load is not scattered from the sensor fiber is that all load signals can have a relatively small bandwidth, exemplarily less than 2 GHz, without introducing excessive intensity noise within the bandwidth of individual DAS signals in the Rx fiber, which would otherwise cause undesired XPM modulation of the individual DAS signals. This can allow for the use of EDFAs with a narrower operational bandwidth than systems with more broadbanded load signals, which again can make it easier to achieve gain flatness over the operational bandwidth.

In such approaches, among others, the Rx load signals may be launched without intensity modulation. In such a case, the power of the Rx load should preferably be kept at a low percentage of the total power in the Tx line, exemplarily below 10 % or 20 %, to minimize the pump power requirements. The Rx load attenuator **715** should be adjusted to achieve a suitable load level in the Rx line which, as discussed above, may typically be 5 to 30 times the time-averaged combined power of the Rx signals.

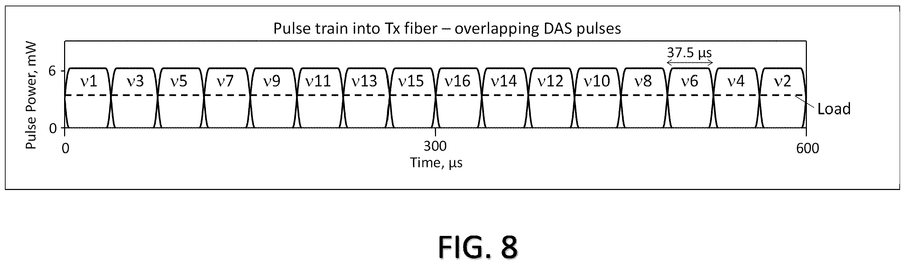

FIG. 3, discussed above, provides an example of a train of non-overlapping DAS pulses that could be used for measurement. An alternative implementation of a DAS pulse train in which apodised DAS pulses are overlapping is shown in **Erreur ! Source du renvoi introuvable..** More specifically, FIG. 8 is a graph of pulse power in milliwatts as a function of time in microseconds, showing one interrogation period of the example train of overlapping interrogation pulses and a single constant load channel transmitted into a Tx fiber.

The implementation with overlapping pulses may be advantageous for at least some applications, because the absence or near absence of a dip in the combined DAS power between the pulses may make it easier to manage the gain dynamics of the Tx amplifiers.

In an implementation like that of FIG. 8, it would be advantageous to order the pulses such that the frequency change between two subsequent pulses is minimized, because similar signal frequencies tend to produce similar ion-inversion profiles at steady state in the erbium amplifier fiber. Thus, any excitation of transients in the amplifier gain can be kept at a low level. This is achievable by, e.g., ordering the pulse frequencies from high to low or from low to high throughout the pulse sequence.

There is a danger that some gain instability could still occur when stepping from the end of one such pulse sequence to the start of the next. However, this could be mitigated by, e.g., adding a short time period between the two sequences that is populated with a suitable load signal, which is placed, e.g., near the first pulse frequency.

Alternatively, the pulse frequencies could be stepped through the odd-numbered channels in one direction, followed by the even-numbered channels in the opposite direction, as illustrated in **Erreur ! Source du renvoi introuvable..** With this approach it may be sufficient to use a single load channel. It is notable in this regard that implementations with unmodulated load channels, such as the load channel represented in FIG. 8, could be good candidates for the narrow- bandwidth load configuration with load bypass around the circulator, as described above.

A potential drawback of the configuration with overlapping pulses is the generation of FWM induced-sidelobes, which may limit the range of applications where that is a suitable approach.

## Claims

1. A distributed fiber-optic sensing system comprising a sequence of connected optical fiber segments (120) including a next-to-last optical fiber segment and a last optical fiber segment, an optical transmitter (105) to transmit load light and optical probe pulses to the sequence, an optical receiver (110) to receive light from the sequence, and an optical filtering circuit, wherein:
each one of the optical fiber segments includes a sensing fiber;
each sensing fiber is optically connected to couple light backscattered therein into a respective Rx optical fiber connected to return signals through the sequence to the optical receiver;
the optical filtering circuit (265) is connected to receive some of the load light output by the next-to-last optical fiber segment and to receive some of the light backscattered in the sensing fiber of the last optical fiber segment, and to output at least some of the received load light and backscattered light into the Rx optical fiber respective to the sensing fiber of the last optical fiber segment; and
the optical filtering circuit is configured to output light with a lower ratio of powers than the light that is received by the optical filtering circuit, the ratio being the time-averaged optical power in a spectrum of the optical probe pulses over the time-averaged optical power in a spectrum of the load light.

2. The distributed fiber-optic sensing system of claim 1, wherein the optical filtering circuit (265) is configured to reduce the ratio of powers by at least 3 dB.

3. The distributed fiber-optic sensing system of claim 1, wherein the optical transmitter and the one or more load sources are configured such that the transmitted optical probe pulses have higher peak amplitudes than the transmitted load light.

4. The distributed fiber-optic sensing system of claim 1, wherein the optical filtering circuit comprises a wavelength-selective attenuator (265) configured to attenuate optical probe signals more than it attenuates light from the optical load sources.

5. The distributed fiber-optic sensing system of claim 1, wherein the optical filtering circuit is configured:
to selectively divert the load light onto a bypass path,
to input, to an optical preamplifier (255), light that has been diverted onto the bypass path, and
to input, to said optical preamplifier, light from the optical probe pulses that has been backscattered by the sensing fiber (147) of the last one of the optical fiber segments.

6. The distributed fiber-optic sensing system of claim 1, wherein:
the optical filtering circuit is configured to direct a portion of outbound light from the next-to-last fiber segment onto a bypass path, and to provide light from said bypass path to an optical preamplifier (255) as preamplifier input if said light is from the optical load sources, but not if it is optical probe light; and
the optical filtering circuit is further configured to direct backscatter to the optical preamplifier (255) as preamplifier input, wherein the backscatter is optical probe light that has been backscattered by the sensing fiber (147) of the last one of the optical fiber segments.

7. The distributed fiber-optic sensing system of claim 5 or of claim 6, wherein an optical attenuator (715) is included in the bypass path.

8. The distributed fiber-optic sensing system of claim 1, wherein:
the optical filtering circuit comprises a first optical path, said path comprising a preamplifier (730), said path specifically connected to receive load light from the optical load sources;
the optical filtering circuit comprises a second optical path, said path comprising a second preamplifier (255), said path specifically connected to receive light from the optical probe pulses;
at least one of the first and second optical paths further comprises an attenuator (735, 740); and
the optical filtering circuit further comprises an element (745) for outputting the load light from the first optical path and the light from the optical probe pulses from the second optical path into the Rx optical fiber respective to the sensing fiber of the last optical fiber segment.

9. The distributed fiber-optic sensing system of claim 1, wherein the optical filtering circuit is configured to provide, in the respective Rx optical fibers, a total time-averaged load power in the range of about 3 dBm to about 20 dBm and a total time-averaged optical power of light from the probe pulses of 0 dBm or less.

10. The distributed fiber-optic sensing system of claim 1, wherein the optical filtering circuit is configured to provide, in the respective Rx optical fibers, a total time-averaged load power that is greater than a total time-averaged optical power of light from the probe pulses.

11. The distributed fiber-optic sensing system of claim 1, wherein the optical filtering circuit is configured to provide, in the respective Rx optical fibers, a total time-averaged load power that is at least 6 dB greater than a total time-averaged optical power of light from the probe pulses.

12. The distributed fiber-optic sensing system of claim 1, wherein the optical filtering circuit is configured to reduce the ratio of powers such that time-averaged optical power in wavelength channels dedicated to probe pulses is reduced relative to time-averaged optical power in wavelength channels dedicated to the light from the optical load sources.

13. The distributed fiber-optic sensing system of claim 1, wherein:
each of the optical fiber segments except for the last optical fiber segment includes a Tx optical fiber (125) for outbound signal transmission from the optical transmitter and further includes an Rx optical fiber (130);
the Tx optical fibers are end-connected by first optical amplifiers (135);
the Rx optical fibers are end-connected by second optical amplifiers (140); and
the sensing fiber of each of the optical fiber segments is a respective Tx optical fiber.

14. The distributed fiber-optic sensing system of claim 1, wherein:
each of the optical fiber segments except for the last optical fiber segment includes a Tx optical fiber (125) for outbound signal transmission from the optical transmitter and further includes an Rx optical fiber (130);
the Tx optical fibers are end-connected by first optical amplifiers (135);
the Rx optical fibers are end-connected by second optical amplifiers (140); and
the sensing fiber of each of the optical fiber segments is a respective additional fiber.

15. The distributed fiber-optic sensing system of claim 13 or claim 14, wherein the Tx and Rx optical fibers at the next-to-last one of the optical fiber segments (205.N-1) are optically connected, with respect to both the light from the optical probe signals and the light from the optical load sources, by an optical path comprising a preamplifier (255) and the wavelength-selective attenuator (265).
